# EUROPEAN PATENT SPECIFICATION

(11) **EP 4 024 768 B1**
(45) Date of publication and mention of the grant of the patent: **11.11.2026**
(21) Application number: 20869742.5
(22) Date of filing: 17.09.2020
(51) Int. Cl.: H04L 41/0853, H04L 41/0866, H04L 41/0806, H04L 41/0859, H04L 41/082, H04L 41/00, H04L 41/045, H04L 41/0213, H04L 41/0226

(54) **DEVICE MANAGEMENT METHOD, DEVICE, SYSTEM AND DEVICE, AND STORAGE MEDIUM**
VORRICHTUNGSVERWALTUNGSVERFAHREN, VORRICHTUNG, SYSTEM UND VORRICHTUNG UND SPEICHERMEDIUM
PROCÉDÉ, DISPOSITIF ET DISPOSITIF DE GESTION DE DISPOSITIF, AINSI QUE DISPOSITIF ET SUPPORT D'INFORMATIONS

(30) Priority: 29.09.2019 CN 201910934891; 01.11.2019 CN 201911062081
(43) Date of publication of application: 06.07.2022
(73) Proprietor: Huawei Technologies Co., Ltd., Longgang District Shenzhen, Guangdong 518129 (CN)
(72) Inventor: DAI, Xinning, Shenzhen, Guangdong 518129 (CN); CHEN, Rui, Shenzhen, Guangdong 518129 (CN); LI, Chuxi, Shenzhen, Guangdong 518129 (CN); WU, Qin, Shenzhen, Guangdong 518129 (CN)
(74) Representative: Isarpatent
(86) International application number: PCT/CN2020/116011
(87) International publication number: WO 2021/057605

(56) References cited:
- WO-A1-2018/049677
- CN-A- 106 257 868
- CN-A- 106 656 792
- CN-A- 109 474 487
- CN-A- 109 947 995
- US-A1- 2012 110 028
- US-A1- 2016 350 095
- US-A1- 2017 078 158
- US-A1- 2019 245 732
- WILTON R RAHMAN CISCO SYSTEMS R ET AL: "YANG Schema Version Selection; draft-wilton-netmod-yang-ver-selection-00.txt", 11 March 2019 (2019-03-11), pages 1 - 16, XP015131975, Retrieved from the Internet <URL:https://tools.ietf.org/html/draft-wilton-netmod-yang-ver-selection-00> [retrieved on 20190311]
- BJORKLUND M: "YANG -A Data Modeling Language for the Network Configuration Protocol (NETCONF)", IETF RFC 7815, 31 October 2010 (2010-10-31), Internet Society (ISOC) 4, rue des Falaises CH- 1205 Geneva, Switzerland, pages 1 - 185, XP055793941, ISSN: 2070-1721
- A IVANOV , D SPENCE , S SAXENA , T NADEAU BROCADE: "Application of YANG Modeling to JSON RPCs for Interoperability Purposes; draft-yang-json-rpc-00.txt", NETWORK WORKING GROUP INTERNET DRAFT, 22 February 2017 (2017-02-22), pages 1 - 21, XP015118067
- BJORKLUND M: "YANG-A Data Modeling Language for the Network Configuration Protocol(NETCONF)", INTERNET ENGINEERING TASK FORCE(IETF) REQUEST FOR COMMENTS: 6020, 31 October 2010 (2010-10-31), pages 1 - 185, XP055793941

## Description

### TECHNICAL FIELD

This application relates to the field of communications technologies, and in particular, the invention relates to a device management method, and system, devices, and a storage medium.

### BACKGROUND

As network scales become larger and more complex, and there are an increasing quantity of network devices, network service providers are required to automatically deploy new services quickly without errors. Conventional command-line interfaces (CLI) and simple network management protocols (SNMP) cannot meet network management requirements in the future. The network configuration protocol (NETCONF) and the yet another next generation (YANG) technology are designed to resolve these problems in existing configuration and management practices and shortcomings of conventional network management protocols. YANG is a data modeling language defined by the Internet Engineering Task Force (IETF) standards organization to model and describe network configuration and management data, and supports complete description of data between a NETCONF client and server. The YANG module is used to describe configuration data, status data, remote procedure calls (RPC), and notifications that are exchanged between the NETCONF client and server.

However, there are a plurality of standards for YANG modules in a network device, and a controller and the network device are usually developed independently. After the network device updates a version of a YANG module, some versions of the YANG module used by the controller may not match the version of the YANG module used by the network device. Once the YANG module of the new version in the network device is non-backwards-compatible, it is difficult for the controller to manage the network device. Therefore, how to manage the network device based on the YANG module is a problem to be urgently resolved.
US 2017/0078158 A1 relates to techniques for YANG model version control validation, in particular, it discloses a method for using a server computer, creating and storing a first module name, a first indication of a first version, and a first signature for a first data model that is digitally stored in a digital electronic data storage unit; receiving a second data model from the data storage unit and identifying a second module name in the second data model; comparing the second module name of the second data model to the first module name of the first data model; determining that the first module name and the second module name comprise a same name, and in response thereto, identifying a second indication of a second version from a revision field of the second data model; using the server computer, comparing the second indication of the second version from the second data model to the first indication of the first version of the first data model; determining the first indication and the second indication indicate the same version, determining a second signature for the second data model; comparing the second signature for the second data model with the first signature for the first data model; determining from the comparison that the second signature and the first signature are different, and in response thereto, creating and storing a flag value in main memory of the server computer and specifying that the second data model is different.

### SUMMARY

The present invention is defined in the appended independent claims to which reference should be made. Advantageous features are set out in the appended dependent claims.

### BRIEF DESCRIPTION OF DRAWINGS

FIG. 1 is a schematic diagram of managing a network device by a controller according to an embodiment of this application;
FIG. 2 is a schematic diagram of managing a network device by a controller according to an embodiment of this application;
FIG. 3 is a schematic diagram of a structure of a YANG module according to an embodiment of this application;
FIG. 4 is a schematic diagram of a structure of a YANG module according to an embodiment of this application;
FIG. 5A and FIG. 5B are a schematic diagram of YANG modules having a conflict according to an embodiment of this application;
FIG. 6 is a schematic diagram of a YANG module in a directory form according to an embodiment of this application;
FIG. 7 is a schematic diagram of an interaction process of a device management method according to an embodiment of this application;
FIG. 8 is a schematic diagram of a structure of an RPC request according to an embodiment of this application;
FIG. 9 is a schematic diagram of a YANG module before and after switching according to an embodiment of this application;
FIG. 10 is a schematic diagram of a structure of an RPC request according to an embodiment of this application;
FIG. 11 is a schematic diagram of a structure of an error prompt information according to an embodiment of this application;
FIG. 12 is a schematic diagram of a structure of an error prompt information according to an embodiment of this application;
FIG. 13 is a schematic diagram of a structure of a directory of a YANG module according to an embodiment of this application;
FIG. 14 is a schematic diagram of a structure of a service component according to an embodiment of this application;
FIG. 15 is a schematic diagram of a structure of a service component according to an embodiment of this application;
FIG. 16 is a schematic diagram of a structure of a service component according to an embodiment of this application;
FIG. 17 is a schematic diagram of a structure of a configuration file for a mapping relationship between a service component and a YANG module according to an embodiment of this application;
FIG. 18 is a schematic diagram of managing a network device by a controller according to an embodiment of this application;
FIG. 19 is a schematic diagram of a device management procedure according to an embodiment of this application;
FIG. 20 is a schematic diagram of a device management procedure according to an embodiment of this application;
FIG. 21 is a schematic diagram of a device management procedure according to an embodiment of this application;
FIG. 22 is a schematic diagram of a structure of a YANG module according to an embodiment of this application;
FIG. 23 is a schematic diagram of a YANG module in a directory form according to an embodiment of this application;
FIG. 24 is a schematic diagram of a structure of a device management apparatus according to an embodiment of this application;
FIG. 25 is a schematic diagram of a structure of a device management apparatus according to an embodiment of this application; and
FIG. 26 is a schematic diagram of a structure of a network device according to an embodiment of this application.
In the following description, features which in the above summary of the invention have been marked as "not claimed" are also hereinafter, when they are described and explained with reference to the drawings, to be understood as "not claimed" or "not part of the invention".

### DESCRIPTION OF EMBODIMENTS

Terms used in embodiments of this application are merely used to explain specific embodiments of this application, but are not intended to limit this application.

As network scales become larger and more complex and there are an increasing quantity of network devices, network service providers are required to automatically deploy new services quickly without errors. NETCONF emerges to meet network management requirements in the future. However, with development and popularization of NETCONF in the industry, a data modeling language is urgently needed to cooperate with NETCONF. A YANG module is one of data modeling languages.

The YANG module is a data modeling language defined by the IETF standards organization to model and describe network configuration and management data, and can support complete description of data between a NETCONF client and server. The YANG module can be used to describe configuration data, status data, remote procedure calls (RPCs), and notifications that are exchanged between the NETCONF client and server.

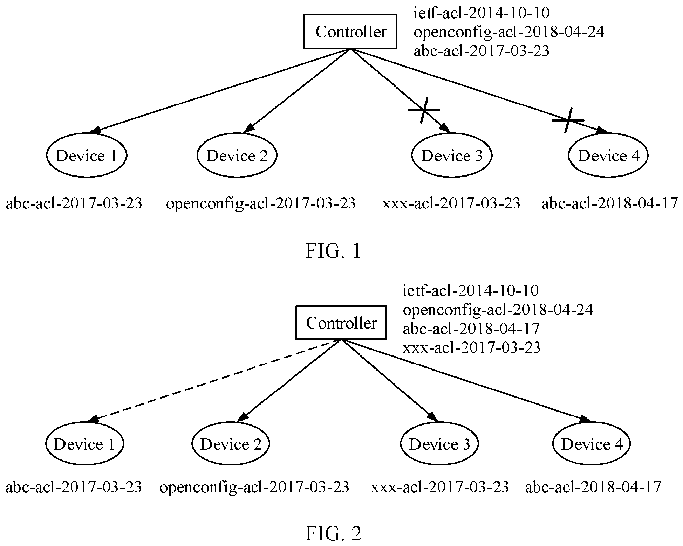

There may be YANG modules of a plurality of standards in a network device. For example, the network device has an ietf YANG, an openconfig YANG, and a private YANG from a device vendor. These YANG modules of different standards are provided by different organizations. Therefore, compatibility between the YANG modules is poor. However, currently, in a service implementation, a factory device usually supports only a YANG module of a specific standard. As a result, it is relatively difficult for an operator to use a controller from a vendor A to manage a device from a vendor B. As shown in FIG. 1, for a device 3 that uses a private YANG file (xxx-acl-2017-03-23.yang) from a vendor of the device 3, a controller cannot manage the device 3 because the controller does not have a capability of supporting the YANG file.

In addition, the controller and the device are usually developed independently. After the device updates a version of a YANG module, some versions of the YANG module used by the controller may not match the version of the YANG module used by the device. Once the YANG module of the new version in the device is non-backwards-compatible, it is also difficult for the controller to manage the device. When a device updates YANG files in the device and some YANG files of new versions are not backwards-compatible with the YANG files of earlier versions, the controller also cannot manage the device. For example, for a device 4 that updates a YANG module version to abc-acl-2018-04-17 in FIG. 1, although the controller supports the YANG module of the version abc-acl-2017-03-23, because a YANG file of a new version is not backwards-compatible with the YANG file of an earlier version, the controller still cannot manage the device 4 that updates the YANG module.

In the related technology, to enable a controller to manage a device from a vendor, the controller side needs to store related YANG module files and support corresponding capabilities. After a device performs upgrading, if the controller needs to manage the device, the controller also needs to perform upgrading correspondingly. For example, for the devices and the controller shown in FIG. 1, to enable the controller to manage the device 3 having a YANG module whose version is xxx-acl-2017-03-23, the controller stores the YANG module whose version is xxx-acl-2017-03-23, as shown in FIG. 2. To enable the controller to manage the device 4 having a YANG module whose version is upgraded to abc-acl-2018-04-17, the controller also upgrades a YANG module whose version is abc-acl-2017-03-23 on the controller correspondingly, where the version is upgraded to abc-acl-2018-04-17. However, in this manner, the device is managed by modifying a capability of the controller, so that the device needs to depend on the controller when being managed. This brings great pressure on development and maintenance of the controller, and reduces device management efficiency.

In view of this, an embodiment of this application provides a device management method. It is assumed that a managing device is a first network device and a managed device is a second network device. In the method, an RPC mechanism and a service process switching mechanism are designed, so that the second network device has a capability of performing switching between YANG modules of a plurality of different standards/versions. Serving as the managing device, the first network device can indicate, by delivering an RPC request, the second network device to switch to a YANG module set that can be identified and supported by the first network device, so that the second network device is successfully managed by the first network device without modifying a capability of the first network device. The first network device may be a controller or another northbound device (for example, a command-line interface CLI).

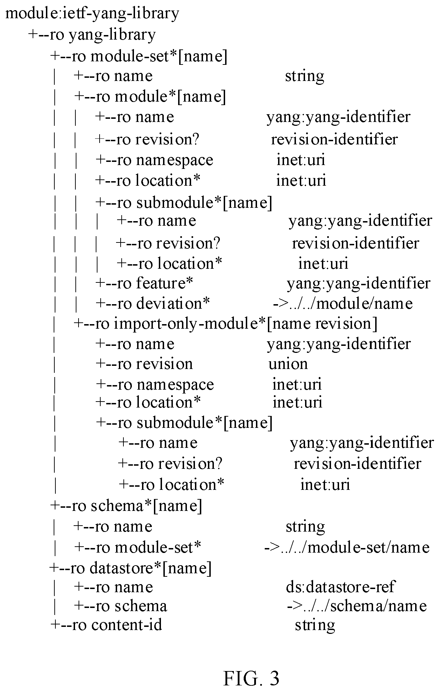

According to the method provided in this embodiment of this application, when YANG modules are used, the YANG modules may be grouped for managing the YANG modules more conveniently. For example, YANG files defined by the IETF organization are classified into a group; YANG files defined by the OpenConfig organization are classified into a group; or according to service functions, YANG files related to an acl service are classified into a group, and YANG files related to a bgp service are classified into a group. Alternatively, different YANG files are classified into different groups according to time information. For example, schema or module-set in yang-library is used to implement grouping. Information about a YANG module group is shown in FIG. 3, and a single YANG module has version information (version).

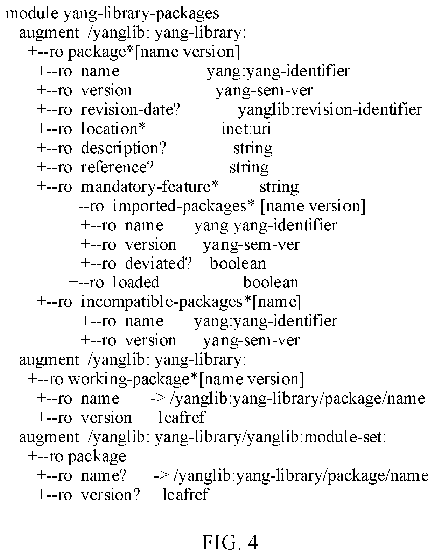

Based on this, a concept of a YANG package (Yang Package) is further introduced in this embodiment of this application. A YANG package is equivalent to a module set having version information. The YANG module group may be considered as a YANG package. A division standard for a YANG package is not limited in this embodiment of this application, provided that references between YANG modules in the YANG package are complete. For example, a YANG module on which a YANG module in the YANG package depends needs to be indexed in the YANG package or a dependent package of the YANG package. For example, a structure of a YANG package having version information provided in this embodiment of this application is shown in FIG. 4. For the YANG package, not only a single YANG module has version information, but version management may also be performed on the YANG package based on a version.

The version of the YANG package is not limited in this embodiment of this application, provided that different YANG packages can be differentiated. For example, the version of the YANG package may include three digits, for example, X.YZ. If the YANG package is updated to be non-backwards-compatible, a version value (X+1).Y.Z is assigned to the YANG package of the new version. If the YANG package is updated to be backwards-compatible, a version value X.(Y+1).Z or X.Y.(Z+1) is assigned to the YANG package of the new version.

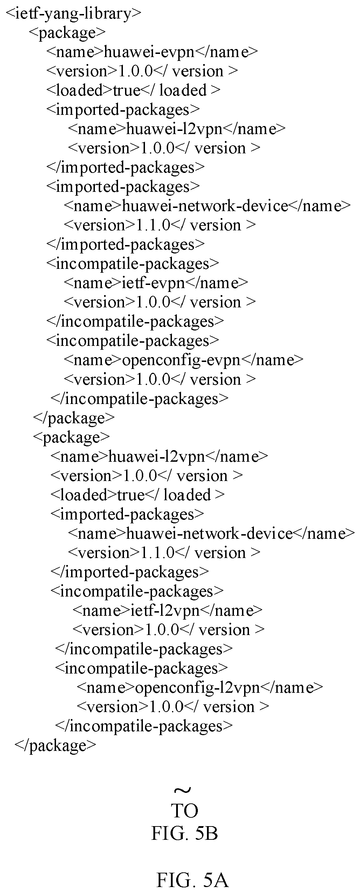

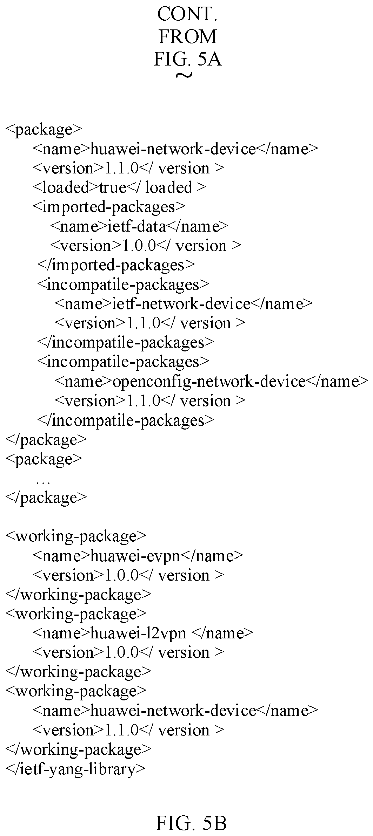

In addition to the version information, the structure of the YANG package further includes some other information, as shown in FIG. 4. A loaded node in FIG. 4 indicates whether the YANG package has been loaded by a device, and has a default value false, indicating that the YANG package has not been loaded. In addition, in a service implementation, the device usually implements only a YANG module set of a specific standard. If the device simultaneously runs YANG module sets of a plurality of standards in the service implementation, a service conflict may occur. An incompatible-packages option in FIG. 4 specifies a package that conflicts with the package. Because the incompatible-packages is used, a plurality of incompatible module sets can be prevented from being simultaneously run during subsequent switching between module sets. A main reason for a conflict is usually that there is a YANG package formed from a YANG module set defined by another organization. A YANG package that is non-backwards-compatible can be identified based on a version number, and therefore is not listed in the structure shown in FIG. 4. For example, in a YANG package shown in FIG. 5A and FIG. 5B, for example, a huawei-evpn package specifies, by using an incompatible-packages option, that the huawei-evpn package conflicts with an ietf-evpn package, where <package>...</package> is used to represent some packages that are not listed.

In addition to the foregoing information, FIG. 4 further includes a working-package node. The working-package node indicates a list of YANG packages currently loaded by the device.

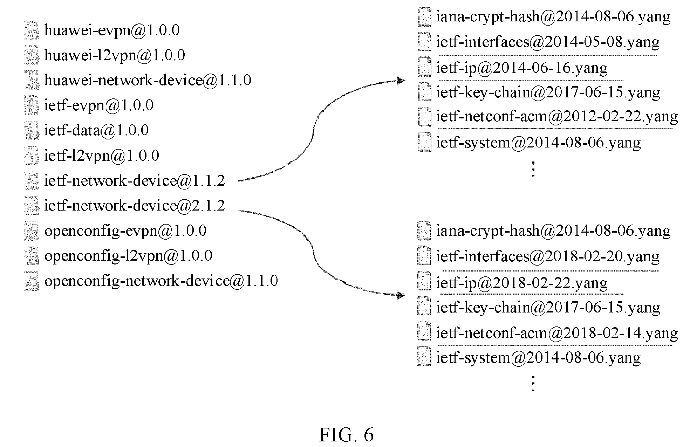

For a plurality of YANG modules in a network device, YANG files may be classified as one or more YANG packages in a directory form in the network device based on service functions or other functions. The directory is named in a form of "package name-package version". For example, as shown in FIG. 6, for a directory ietf-network-device@1.1.2, YANG files in the directory are shown in the upper right part in FIG. 6, where ietf-network-device indicates a package name, and 1.1.2 indicates a version. For a directory ietf-network-device@2.1.2, YANG files in the directory are shown in the lower right part in FIG. 6, where ietf-network-device indicates a package name, and 2.1.2 indicates a version.

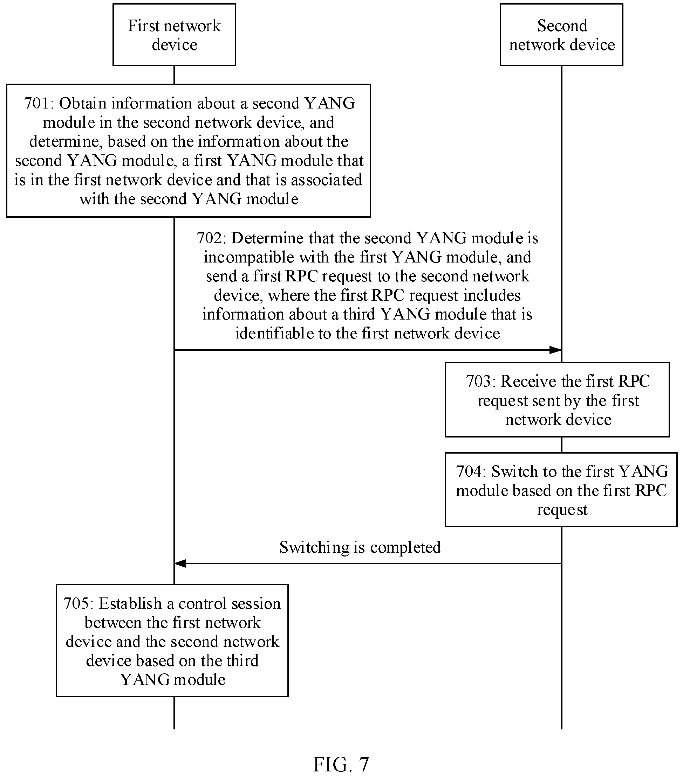

The following describes a method provided in an embodiment of this application by using an example in which a managing device is a first network device and a managed device is a second network device, and with reference to a schematic diagram of an interaction process shown in FIG. 7. The method includes the following processes:

701: The first network device obtains information about a second YANG module in the second network device, and determines, based on the information about the second YANG module, a first YANG module that is in the first network device and that is associated with the second YANG module.

For example, when the first network device obtains the information about the second YANG module in the second network device, the first network device may read YANG package information such as version information in yang-library in the second network device by using a second RPC request message such as <get-dat>. The second network device returns YANG package data to the first network device, and the first network device obtains the information about the second YANG module in the second network device. Then, the first network device may determine, based on the information about the second YANG module, the first YANG module that is in the first network device and that is associated with the second YANG module.

702: The first network device determines that the second YANG module is incompatible with the first YANG module, and sends a first RPC request message to the second network device, where the first RPC request message includes information about a third YANG module that is identifiable to the first network device.

After determining the first YANG module that is in the first network device and that is associated with the second YANG module, the first network device may compare the second YANG module and the first YANG module for a difference. For example, the first network device finds that the second YANG module existing in the second network device is incompatible with the first YANG module in the first network device, and generates the first RPC request message, where the first RPC request message is used to trigger the second network device to switch a YANG module that is running to the third YANG module. For example, the first network device generates a <select-yang-packages> RPC request packet for YANG package switching. The first YANG module includes the third YANG module.

For example, a configuration file shown in FIG. 5A and FIG. 5B is used as an example. YANG packages such as ietf-evpn and openconfig-evpn that are incompatible with a huawei-evpn package are indicated and listed by using incompatible-packages. All the information is recorded in yang-library. The first network device may query the information. Alternatively, the second network device may actively report the information after establishing a connection.

For another example, in a directory shown in FIG. 6, a version of a YANG package includes three digits, for example, X.YZ. If the package is updated to be non-backwards-compatible, a version value (X+1).Y.Z is assigned to the package of the new version. If the package is updated to be backwards-compatible, a version value X.(Y+1).Z or X.Y.(Z+1) is assigned to the package of the new version. For example, in FIG. 6, ietf-network-device@2.1.2 is incompatible with ietf-network-device@1.1.2.

In an example embodiment, because the network device supports only a YANG module set of a specific standard/version at a moment, the method provided in this embodiment of this application defines an RPC request for module switching. For example, when the second network device goes online as a new device or the second network device is reconnected after disconnection or performs upgrading that is non-backwards-compatible, and the first network device does not perform synchronous upgrading in time, the first network device delivers the first RPC request message to the second network device, so that the second network device switches to a YANG package of a specific version, that is, the third YANG module supported by the first network device.

The new device is a device using a YANG module set that does not fall within, by default, a range of YANG module sets supported by the first network device. After the method provided in this embodiment of this application is used, the new device supports YANG module sets of at least two standards. For example, one standard is provided by a standards organization such as the IETF or OpenConfig. When the new device goes online for the first time, the new device may switch, by using the method provided in this embodiment of this application, the module set in the new device to a YANG module supported by the first network device.

When the second network device performs upgrading that is non-backwards-compatible and the first network device does not perform synchronous upgrading in time, the first network device may deliver the first RPC request message to the second network device before performing the synchronous upgrading, so that the second network device switches back to a module set of an earlier version and can be managed by the first network device.

It should be noted that, when the second network device performs upgrading that backwards-compatible, whether the first network device selects a module set whose version number is the same as that of a module set in the first network device and that is switched to or directly manages the second network device is determined according to a policy of the first network device. This is not limited in this embodiment of this application.

In other words, regardless of a specific case in which the first network device is triggered to send the first RPC request message to the second network device, in an example embodiment, before the first network device sends the first RPC request message to the second network device, the method further includes: The first network device reads the information about the second YANG module in the second network device by using the second RPC request message, and generates the first RPC request message when determining, based on the information about the second YANG module in the second network device, that the first YANG module that is in the first network device and that is associated with the second YANG module is incompatible with the second YANG module. Information about a YANG module includes but is not limited to version information of the YANG module. The first network device reads version information of the second YANG module in the second network device, compares the version information of the second YANG module in the second network device with version information of the first YANG module that exists in the first network device and that is associated with the second YANG module, to determine whether the first YANG module in the first network device is incompatible with the second YANG module in the second network device. If the first YANG module is incompatible with the second YANG module, the first network device is triggered to generate the first RPC request message.

For example, the first network device may be a controller. When the controller has a function of comparing YANG packages for a difference and a function of delivering a message for module set switching, the controller performs device management by using the method provided in this embodiment of this application. If the controller has an error during device management, or the controller does not have the function of comparing YANG packages for a difference or the function of delivering a message for module set switching, the controller may use another northbound tool such as a CLI to perform device management.

For example, the first network device may use the another northbound tool such as the CLI to read the version information of the second YANG module in the second network device, read, from the first network device, the version information of the first YANG module that exists in the first network device and that is associated with the second YANG module, and compare the version information of the second YANG module in the second network device with the version information of the first YANG module that exists in the first network device and that is associated with the second YANG module, to determine whether the first YANG module in the first network device is incompatible with the second YANG module in the second network device. If there is an incompatibility case, incompatibility information such as the version information of the incompatible YANG module is sent to the controller, and the controller generates the first RPC request message based on the incompatibility information. Alternatively, if there is an incompatibility case, the another northbound tool such as the CLI generates the first RPC request message based on incompatibility information, and sends the first RPC request message to the controller, and the controller sends the first RPC request message to the second network device.

For example, the first RPC request message includes the information about the third YANG module that is identifiable to the first network device. For example, the information about the third YANG module that is identifiable to the first network device includes version information of a set to which the third YANG module belongs.

The first RPC request message not only includes the information about the third YANG module that is identifiable to the first network device, but also includes one or more of the following information:
(1) first indication information, where the first indication information is used to indicate that a fourth YANG module on which the third YANG module depends is to be switched;
(2) first option information, where the first option information is used to indicate that a target YANG module in the fourth YANG module on which the third YANG module depends remains unchanged; and
(3) second option information, where the second option information is used to indicate that a target set is to be switched, and the target set is a set other than the set to which the third YANG module belongs.

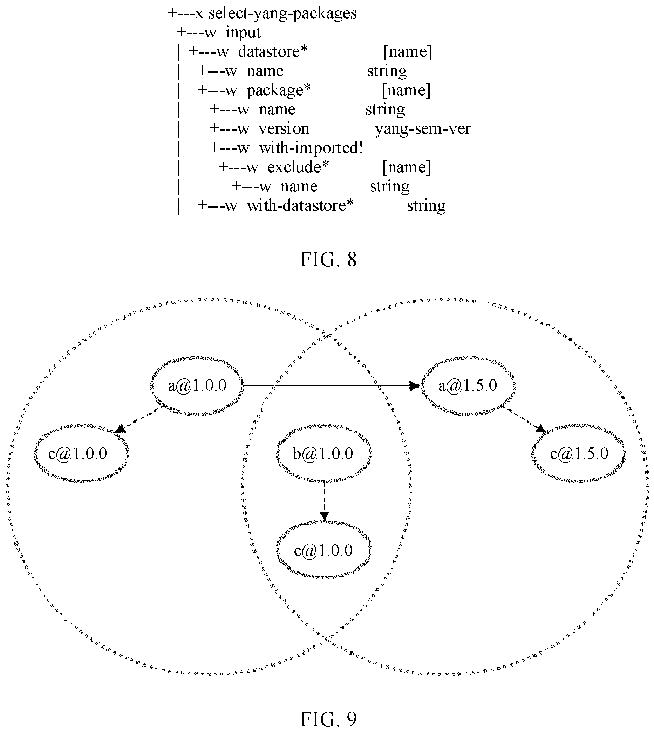

For example, a structure of the first RPC request message may be shown in FIG. 8. In the first RPC request message shown in FIG. 8, datastore is a list node, and indicates a specific datastore by using a name subnode. The first network device may use the first RPC request message to indicate that a series of YANG packages is to be switched for several datasets (datastores). A package node indicates specific YANG packages to be switched for the datastore. A YANG package is determined by using name and version subnodes. A with-imported node is a presence container node, namely, the first indication information. The with-imported node indicates that during switching of the YANG package, a YANG package on which the YANG package depends is also selected for switching. When the with-imported node is not used, switching is not performed for an entire dependency chain by default.

The with-imported node is mainly used to resolve some conflict problems between YANG packages. As shown in FIG. 9, three YANG packages a@1.0.0, b@1.0.0, and c@1.0.0 are originally used in the second network device, where the package c is a package on which the packages a and b depend. After the first network device delivers, to the second network device, the first RPC request message for module set switching, the package a@1.0.0 is switched to a package a@1.5.0. If the first RPC request message does not include the with-imported option, the second network device still uses the package c of the earlier version, that is, version 1.0.0. If the first RPC request message includes the with-imported option, during switching of the package a, the second network device may simultaneously switch the package c to a package c of a version on which the package a depends, that is, c@1.5.0.

In addition, as shown in FIG. 8, the first RPC request message further includes an exclude option. The exclude option is the first option information and is used to specify which dependent package remains unchanged. For example, if the exclude option specifies a specific YANG module for the fourth YANG module on which the third YANG module depends, the specific YANG module is used as a target YANG module, and the target YANG module remains unchanged. Optionally, the second network device switches a YANG module other than the target YANG module in the fourth YANG module on which the third YANG module depends.

In an example embodiment, as shown in FIG. 8, the first RPC request message further includes a with-datastore option. The with-datastore option is used to specify a specific datastore, namely, the target set, for which same switching needs to be performed, and the with-datastore option is the second option information. Before an NMDA architecture (Network Management Datastore Architecture) is used, datastores such as running, candidate, startup, and operational datastores actually use a same module set. After the NMDA architecture is used, these datasets may theoretically use different module sets. However, this is not limited in this embodiment of this application. Therefore, the with-datastore option is provided. When same switching needs to be simultaneously performed for a plurality of datastores, the with-datastore option may be used.

703: The second network device receives the first RPC request message sent by the first network device.

There is a communication connection between the first network device and the second network device, and the second network device may receive, through the communication connection, the first RPC request message sent by the first network device. For content of the first RPC request message, refer to the descriptions in 702. Details are not described herein again.

704: The second network device switches to the third YANG module based on the first RPC request message.

In an example embodiment, the switching to the third YANG module based on the first RPC request message includes: unloading a currently loaded YANG module and loading the third YANG module based on the first RPC request message.

In addition, the first RPC request message may include other optional information in addition to the information about the third YANG module supported by the first network device. In an example embodiment, when the first RPC request message further includes the first indication information, because the first indication information is used to indicate that the fourth YANG module on which the third YANG module depends is to be switched, after switching to the third YANG module based on the first RPC request message, the second network device further switches the fourth YANG module on which the third YANG module depends.

In an example embodiment, when the first RPC request message further includes the first option information, because the first option information is used to indicate that the target YANG module in the fourth YANG module on which the third YANG module depends remains unchanged, after switching to the third YANG module based on the first RPC request message, the second network device further switches a non-target YANG module in the fourth YANG module on which the third YANG module depends.

In an example embodiment, when the first RPC request message further includes the second option information, because the second option information is used to indicate that the target set is to be switched, and the target set is the set other than the set to which the third YANG module belongs, after switching to the third YANG module based on the first RPC request message, the second network device further switches the target set.

Further, regardless of a specific YANG module to be switched, in an example embodiment, before the unloading a currently loaded YANG module and loading the third YANG module based on the first RPC request message, the second network device further obtains a YANG module list based on the currently loaded YANG module and the third YANG module, where the YANG module list does not include a YANG module that conflicts with the third YANG module; the second network device detects whether a dependency chain for the YANG module list is complete; and when the dependency chain for the YANG module list is complete, the second network device performs the step of unloading a currently loaded YANG module and loading the third YANG module based on the first RPC request message.

It should be noted that if the fourth YANG module on which the third YANG module depends is switched, the non-target YANG module is switched, or the target set is switched, the YANG module list may further include a fourth YANG module on which a third YANG module that is switched to depends, a non-YANG module that is switched to, or a YANG module included in a target set that is switched to. The fourth YANG module on which the third YANG module that is switched to depends, the non-YANG module that is switched to, or the YANG module included in the target set that is switched to may be used as a to-be-switched YANG package. According to the method provided in this embodiment of this application, completeness of a dependency chain is also detected for these YANG modules.

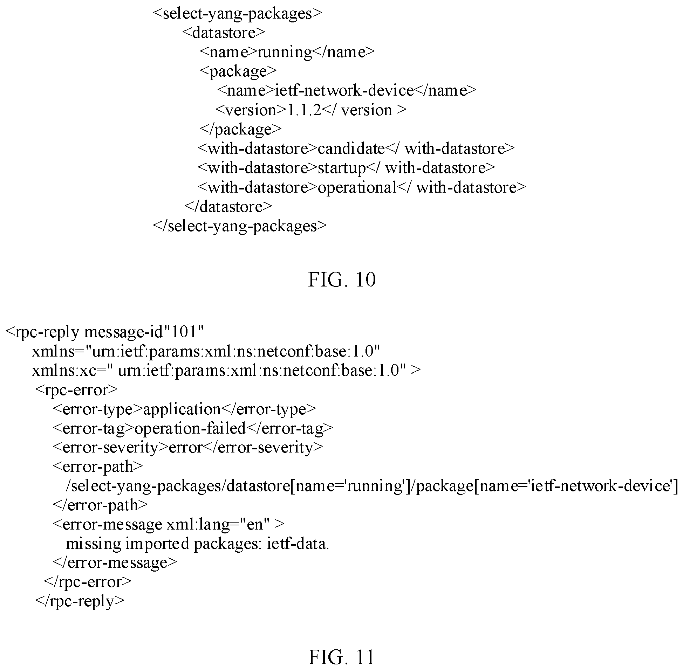

For example, a second network device uses a private YANG from a vendor of the second network device by default. After the second network device receives an RPC packet for module set switching shown in FIG. 10, that is, the first RPC request message, the second network device first adds a to-be-switched YANG package to a list of currently loaded YANG packages, and deletes, from the list, a package that conflicts with these YANG packages (for example, querying whether there is a conflict by using an incompatible-packages node in yang-library), to obtain a new temporary YANG package list. Then, the second network device checks whether a dependency chain for the YANG package list is complete, in other words, whether a package on which each YANG package depends (for example, a YANG package listed in an imported-packages node) can be found from the list. If the dependency chain is incomplete, the second network device returns a corresponding error.

For example, if the second network device detects that the dependency chain for the YANG module list is incomplete, the second network device returns a corresponding error to the first network device, as shown in FIG. 11. An error-path node displays, in an xpath form, which package fails to be loaded. The following information is used as an example:
/select-yang-packages/datastore[name='running']/package[name='ietf-network-device'].

Specific error information is displayed in error-message. If the error is caused because the dependency chain is incomplete, according to the method provided in this embodiment of this application, a specific missing package may be further prompted. For example, an ietf-network-device package depends on a package named ietf-data. After the second network device receives the first RPC request message for module set switching, if the second network device finds that the package is missing when detecting a new package list, the second network device provides error information shown in FIG. 11. After receiving the error information shown in FIG. 11 and providing a reply, the first network device includes the missing package by using a package node or a with-imported node in the select-yang-packages packet.

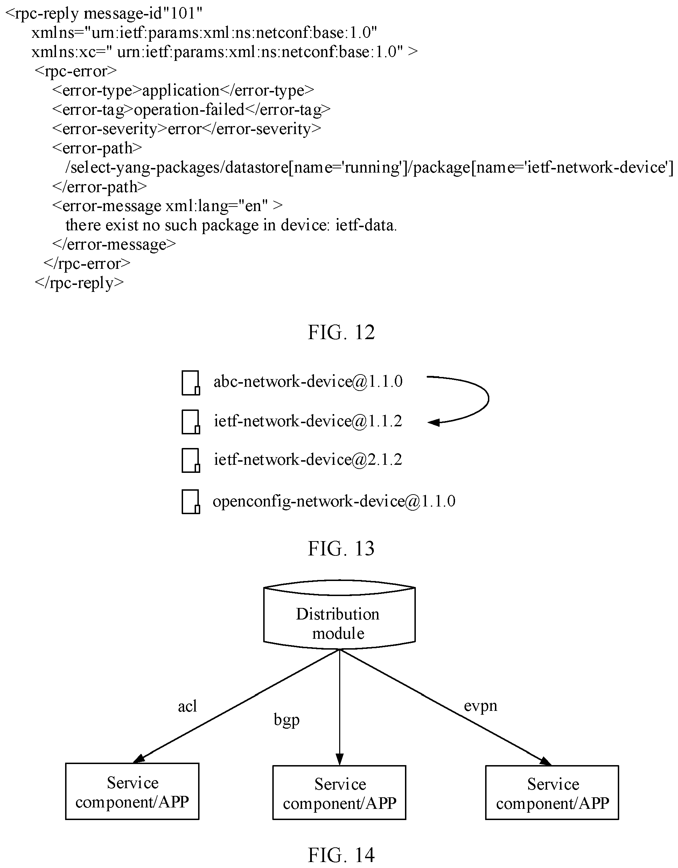

In addition, if the second network device does not have a required YANG package, error-message indicates error information "there is no *** package in device", as shown in FIG. 12.

The foregoing provides descriptions by merely using an example in which the second network device returns the corresponding error to the first network device when detecting that the dependency chain for the YANG module list is incomplete. When the second network device detects that the dependency chain for the YANG module list is complete, the second network device unloads a loaded YANG package that conflicts with the to-be-switched YANG package (for example, unloading a YANG module in these YANG packages). Then, the second network device loads and parses a YANG module in the to-be-switched YANG package from a corresponding directory in the second network device based on a name and a version number of the to-be-switched YANG package in the first RCP request. For example, in some content in a YANG package shown in FIG. 13, a YANG module in an ietf-network-device@1.12 package is loaded and parsed from a corresponding directory in the second network device. As shown by the arrow in FIG. 13, the second network device currently uses a YANG package abc-network-device@1.1.0. After the second network device receives an RPC request for YANG package switching, if the RPC request indicates that ietf-network-device@1.1.2 is to be switched to, the second network device performs YANG package switching from the originally used YANG package abc-network-device@1.1.0 to using the YANG package ietf-network-device@1.1.2.

Regardless of switching to the third YANG module, switching to another YANG module, or switching to all YANG modules in the target set, when the second network device receives the first RPC request message, after the second network device obtains configuration data of a YANG module and successfully loads a new YANG module, a service component on the second network device may execute service logic. The service component is a program that finally completes service processing logic, and the service component usually subscribes to service-related data of the service component from a subscription and distribution module of the second network device by using, for example, a subscription-publish mechanism. After the configuration data in the second network device changes, the subscription and distribution module pushes changed configuration data to a service component that subscribes to the configuration data. After receiving the changed configuration data, the service component further completes service processing logic.

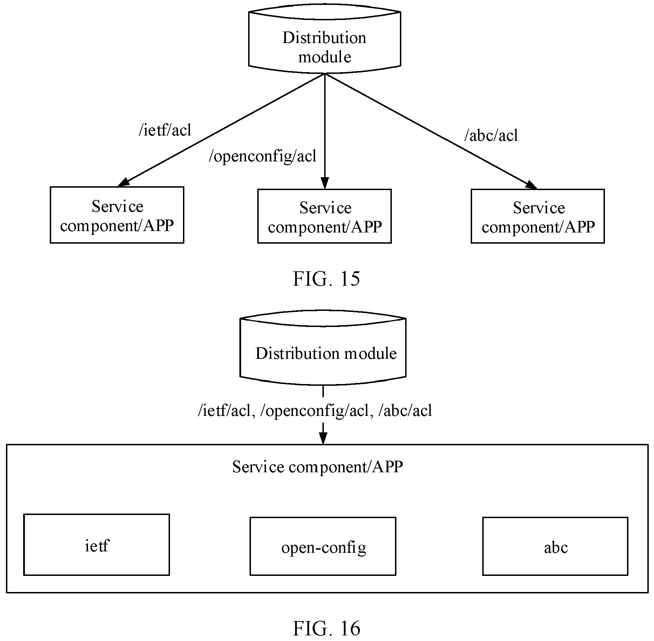

When the second network device originally supports only one YANG module set, a single service function corresponds to one service component, as shown in FIG. 14. acl, bgp, and evpn correspond to respective service components/APPs. However, according to the method provided in this embodiment of this application, when the second network device may support a plurality of YANG module sets, corresponding service components may be added. Therefore, for a purpose of ensuring that a YANG module that is switched to can be normally used, in an example embodiment, after the switching to the third YANG module based on the first RPC request message, the method further includes: terminating an original service component, and running a new service component corresponding to the third YANG module. For example, for the component corresponding to acl shown in FIG. 14, a new acl component is added to obtain three acl components, as shown in FIG. 15. A manner of adding a service component includes but is not limited to duplicating the original component and then modifying the original component to obtain the new service component. Alternatively, the new business component may be directly generated. In addition, functions of the original service component may be extended, and the service component performs secondary data distribution, as shown in FIG. 16. The functions of the original service component/APP are extended. After the subscription and distribution module distributes corresponding functions to the service component, the service component distributes the functions.

According to the method provided in this embodiment of this application, when a device that does not go online for the first time upgrades a module, a data upgrading problem arises regardless of whether the upgrade is backwards-compatible or not. Because there is no universal standard or rule for a mapping relationship between an unloaded YANG module and a YANG module that is switched to, a mapping rule may be manually hard-coded into a script file or a file in a format. When data upgrading is triggered, a specific module uses original data as an input and the mapping rule in a mapping script as processing logic to calculate corresponding new module data. A module change is mainly reflected in the following three cases:
Case 1: A path of the unloaded YANG module in the third YANG module that is switched to changes. In the case 1, a service function still exists, but a representation manner of a related node of a service is changed to an external representation manner. For example, a path of the service or a name of the node of the service is changed, but a presentation manner of the service in a service APP usually remains unchanged. Actually, such data upgrading does not bring about a change to the service.
Case 2: The unloaded YANG module is deleted from the third YANG module that is switched to. For such upgrading, the device needs to notify a corresponding APP of the deletion change, so that the APP performs a corresponding resource clearing or releasing operation. When backward compatibility is supported, a case in which a node is deleted should not exist.
Case 3: The third YANG module that is switched to includes a node that cannot be found in the unloaded YANG module. For such upgrading, if the unloaded module does not include corresponding data, corresponding module data cannot be constructed. Therefore, there is no need to consider this case.

For the case 1 and the case 2, during data upgrading, that is, during switching to the third YANG module, if the third YANG module is backwards-compatible with the unloaded YANG module, the device does not need to generate difference information brought in the data upgrading process because the APP does not need to be switched and a deletion case as described in the case 2 does not occur. If the third YANG module is non-backwards-compatible with the unloaded YANG module, the device actually generates two pieces of difference information. One is data of the unloaded module and the other is data of the third YANG module that is switched to. As shown in FIG. 16, the device uniformly delivers the two pieces of data to the subscription and distribution module, and the subscription and distribution module notifies an APP component of the two pieces of data. For example, a child APP of the original service component is first used to clear and release a resource. After the child APP of the original service component is terminated, a new YANG package, namely, a child APP corresponding to the third YANG module, that is, the new service component, is run, and the new service component processes data of the YANG module.

Therefore, in an example embodiment, the terminating an original service component, and running a new service component corresponding to the third YANG module includes: the second network device generates first difference information based on data of the unloaded YANG module, and generates second difference information based on data of the third YANG module; and the second network device controls, based on the first difference information, the original service component to clear and release a resource, and runs, based on the second difference information, the new service component corresponding to the third YANG module to execute a service. To be specific, before the third YANG module is switched to, the original service component is first controlled to clear and release the resource, and then the new service component is run, to implement smooth service transition.

It should be noted that both manners shown in FIG. 15 and FIG. 16 are implemented through addition. A difference is whether an independent component is added or one component is used to implement a plurality of functions. A specific manner to be used is not limited in this embodiment of this application. In an example embodiment, to run the new service component corresponding to the third YANG module, the corresponding new service component may be determined based on a mapping relationship between a service component and a YANG package. For example, the mapping relationship between a service component and a YANG package may be recorded in a configuration file in the device. When a YANG package is to be switched, a service component that has a mapping relationship with the YANG package may be queried from the configuration file, and the service component is used as the new service component for running.

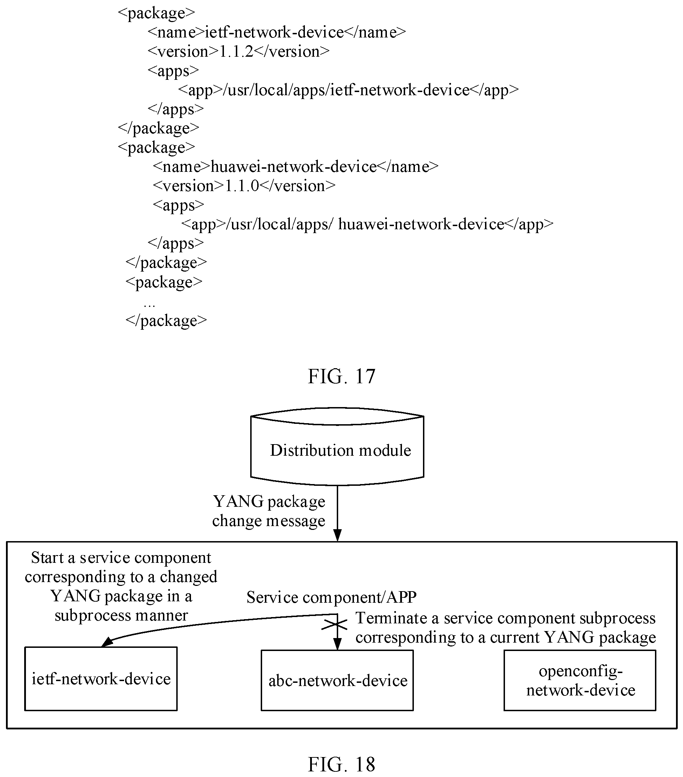

For example, the configuration file is shown in FIG. 17. The second network device sends one or more YANG package change messages to the subscription and distribution module. All service components may subscribe to such messages, and specifically subscribe to different messages. A structure shown in FIG. 16 is used as an example. As shown in FIG. 18, after listening to a YANG package change message, a parent service component first terminates a child service component corresponding to a current YANG package, then queries the configuration file for child service components associated with a YANG package in the RPC request packet, and starts the child service components by using a subprocess. In an example embodiment, the second network device may alternatively first start the new service component, and then terminate the original service component. A sequence of starting the new service component and terminating the original service component is not limited in this embodiment of this application.

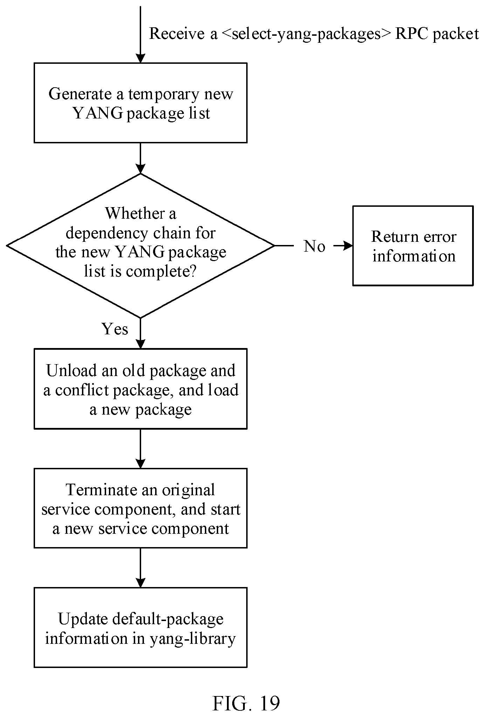

In conclusion, after the second network device receives the first RPC request message, a YANG module switching process may be shown in FIG. 19. After receiving a <select-yang-packages> RPC request packet, the second network device generates a temporary new YANG package list, detects whether a dependency chain for the new YANG package list is complete, and returns an error to the first network device if the dependency chain for the new YANG package list is incomplete. If the dependency chain for the new YANG package list is complete, the second network device unloads an old package and a conflict package, and loads a new package. Then, the second network device terminates an original service component and runs (starts) a new service component. If the new service component is run, it indicates that a module set is successfully switched. The second network device updates information about the current YANG package to a working-package list node in yang-library.

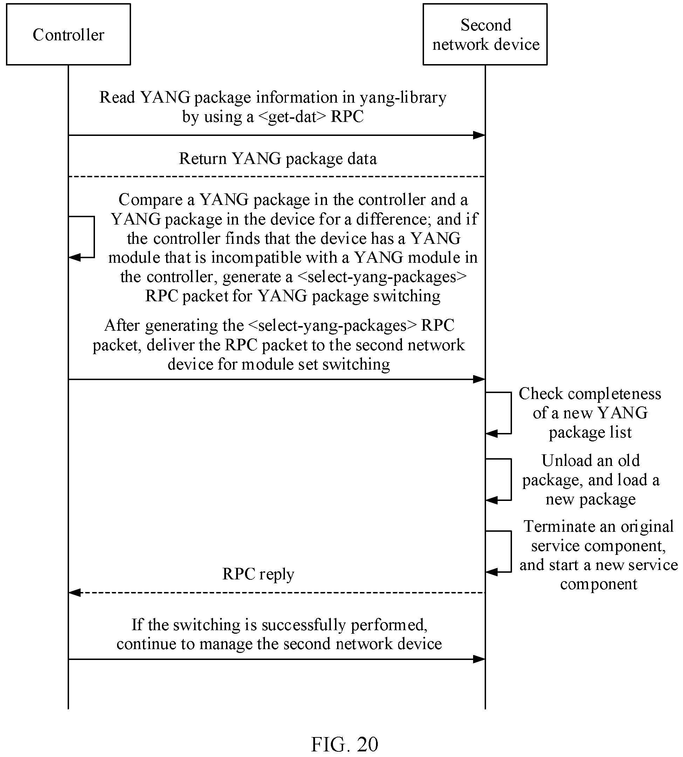

When the first network device is a controller, if the controller supports comparison of YANG packages for a difference, an interaction procedure between the controller and the second network device according to the device management method may be shown in FIG. 20. The controller reads YANG package information such as version information in yang-library in the second network device by using a <get-dat> RPC. The second network device returns YANG package data to the first network device. The controller compares a YANG package in the controller with a YANG package in the device for a difference. For example, if the controller finds that the device has a YANG module that is incompatible with a YANG module in the controller, the controller generates a <select-yang-packages> RPC request packet for YANG package switching. The controller sends the generated <select-yang-packages> RPC request packet to the second network device for module set switching. The second network device forms a new YANG package list based on the RPC request, and checks completeness of a dependency chain for the new YANG package list. If a check result is that the dependency chain for the new YANG package list is complete, the second network device unloads an old package and loads a new package. The second network device terminates an original service component and starts a new service component. If all the processes are successfully performed, the second network device returns an RPC reply to the controller, to notify the controller that the YANG module is successfully switched, and the controller may continue to manage the second network device. If an error occurs in any process, the second network device returns error information to the controller.

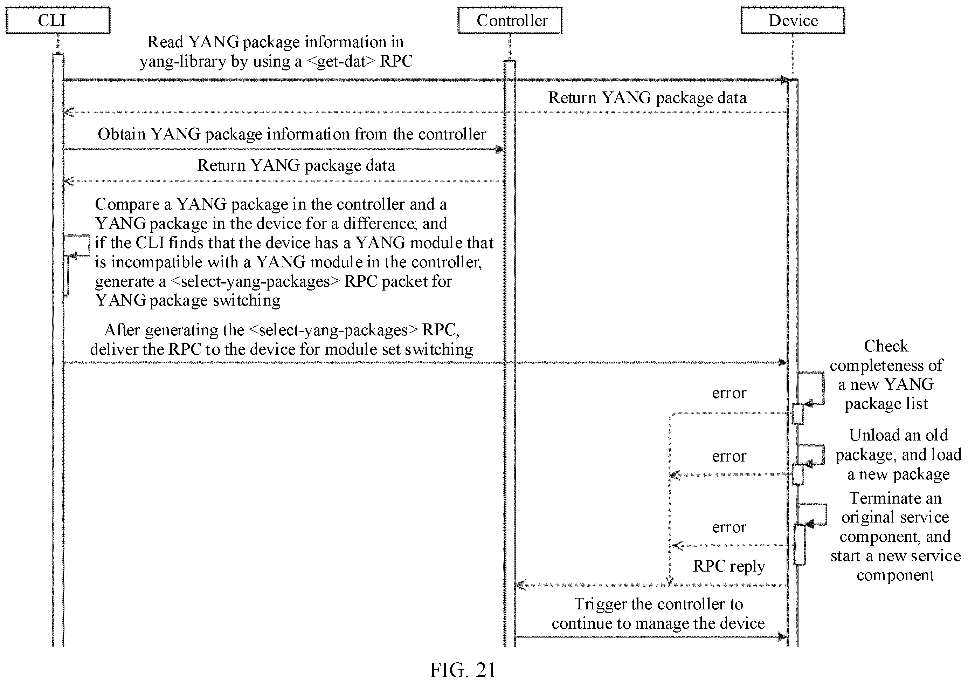

When the first network device is a controller, if the controller does not support comparison of YANG packages for a difference, the method provided in this embodiment of this application is further applied to a CLI device. An interaction procedure between the CLI device, the controller, and the second network device in the device management method may be shown in FIG. 21. The CLI device reads YANG package information such as version information in yang-library in the second network device by using a <get-dat> RPC. The second network device returns YANG package data to the CLI device. The CLI device further obtains YANG package information such as version information from the controller. Then, the CLI device compares a YANG package in the controller and a YANG package in the second network device for a difference. For example, if the CLI device finds that the second network device has a YANG module that is incompatible with a YANG module in the controller, the CLI device generates a <select-yang-packages> RPC request packet for YANG package switching. The CLI device sends the generated <select-yang-packages> RPC request packet to the second network device for module set switching. The second network device forms a new YANG package list based on the RPC request, and checks completeness of a dependency chain for the new YANG package list. If a check result is that the dependency chain for the new YANG package list is complete, the second network device unloads an old package and loads a new package. The second network device terminates an original service component and starts a new service component. If all the processes are successfully performed, the second network device returns an RPC reply to the controller, to notify the controller that the YANG module is successfully switched, and the controller may continue to manage the second network device. If an error occurs in any process, the second network device returns error information to the controller.

705: The first network device establishes a control session between the first network device and the second network device based on the third YANG module.

After the second network device switches to the third YANG module, because the third YANG module is a YANG module supported by the first network device, the first network device may manage the second network device based on the third YANG module. For example, the first network device establishes the control session between the first network device and the second network device based on the third YANG module.

In an example embodiment, before the first network device establishes the control session between the first network device and the second network device based on the third YANG module, the first network device receives an RPC reply message, where the reply message indicates that switching has been performed.

In this embodiment of this application, a device management procedure mainly includes replacing a YANG package. If a classification granularity for YANG packages is increased, a YANG package conflict caused by a small-granularity YANG package can be avoided. However, in a manner of a large granularity, because a granularity for a YANG package is restricted, a large-granularity YANG package is used less flexible than a small-granularity YANG package. The classification granularity for YANG packages is not limited in this embodiment of this application, and may be flexibly adjusted based on an application scenario.

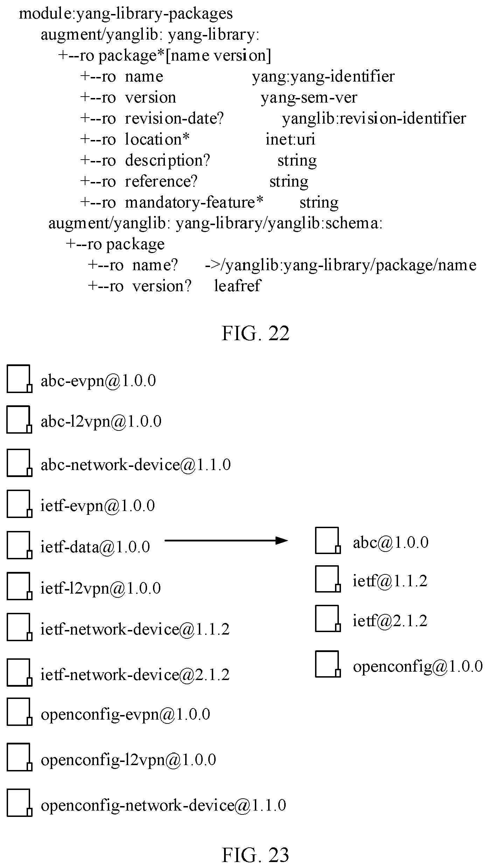

In addition, only a module-set node is used as an example for description. In an example embodiment, the method provided in this embodiment of this application further supports in augmenting a package to a schema node in yang-library instead of to the module-set node. In yang-library, a datastore can be bound to only one schema, and there is no imported-packages list node in the package. Therefore, the package herein is actually a complete module set, as shown in FIG. 22. A version of a Yang package and an organization form of the Yang package in a device are consistent with the structure of the YANG package shown in FIG. 4. However, packages are not further classified based on service functions or other functions, as shown in FIG. 23. All ietf-related YANG files are aggregated into a YANG package, and a same manner is applied to openconfig-related and huawei-related YANG files. Certainly, several ietf packages may be sorted out based on versions. However, these ietf packages are complete and no longer need to depend on other YANG packages.

In addition, a YANG package is a complete large-granularity package, and for one datastore, only one YANG package can be switched. Therefore, the select-yang-packages packet can be simplified. For example, after receiving an RPC for module set switching, the device no longer needs to check completeness of a dependency chain for a YANG package because the YANG package no longer depends on any other package. In a simplified procedure, processes of unloading an old package and loading a new package and a YANG module are similar to those described in 703. Details are not described again. There is no package conflict caused by a small-granularity package. Therefore, the overall procedure on the device side in this embodiment is relatively simple.

According to the method provided in this embodiment of this application, when the network device supports switching between YANG modules of different standards, the second network device is notified, by using an RPC, to switch to a YANG module supported by the first network device. This can reduce dependence of the second network device on the first network device when the second network device is managed by the first network device, expand an application range of the network device, and improve device management efficiency.

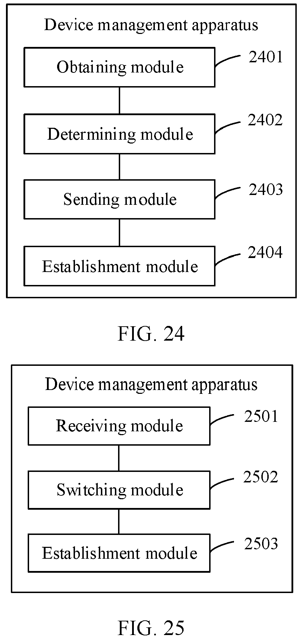

A device management apparatus is provided. The apparatus is applied to a first network device, and the device management apparatus performs, via a plurality of modules shown in FIG. 24, the functions performed by the first network device in FIG. 7. As shown in FIG. 24, the apparatus includes:
an obtaining module 2401, configured to obtain information about a second yet another next generation YANG module in a second network device, where the first network device is a network management device;
a determining module 2402, configured to: determine, based on the information about the second YANG module, a first YANG module that is in the first network device and that is associated with the second YANG module; and determine that the second YANG module is incompatible with the first YANG module;
a sending module 2403, configured to send a first remote procedure call RPC request message to the second network device, where the first RPC request message includes information about a third YANG module that is identifiable to the first network device, the first YANG module includes the third YANG module, and the first RPC request message is used to trigger the second network device to switch a YANG module that is running to the third YANG module; and
an establishment module 2404, configured to establish a control session between the first network device and the second network device based on the third YANG module.

In an example embodiment, the information about the third YANG module that is identifiable to the first network device includes version information of a set to which the third YANG module belongs.

In an example embodiment, the first RPC request message further includes first indication information, and the first indication information is used to indicate that a fourth YANG module on which the third YANG module depends is to be switched.

In an example embodiment, the first RPC request message further includes first option information, and the first option information is used to indicate that a target YANG module in the fourth YANG module on which the third YANG module depends remains unchanged.

In an example embodiment, the first RPC request message further includes second option information, the second option information is used to indicate that a target set is to be switched, and the target set is a set other than the set to which the third YANG module belongs.

In an example embodiment, the second YANG module in the second network device is a YANG module that is currently running in the second network device.

In an example embodiment, before the first network device establishes the control session between the first network device and the second network device based on the third YANG module, the first network device receives an RPC reply message, where the reply message indicates that switching has been performed.

An embodiment of this application provides a device management apparatus. The apparatus is applied to a second network device, and the device management apparatus performs, via a plurality of modules shown in FIG. 25, the functions performed by the second network device in FIG. 7. As shown in FIG. 25, the apparatus includes:
a receiving module 2501, configured to receive a first remote procedure call RPC request message sent by a first network device, where the first RPC request message includes information about a third yet another next generation YANG module that is identifiable to the first network device, the third YANG module is included in a first YANG module, the first YANG module is determined by the first network device based on information about a second YANG module in the second network device, and the first RPC request message is used to trigger the second network device to switch a YANG module that is running to the third YANG module;
a switching module 2502, configured to switch to the third YANG module based on the first RPC request message; and
an establishment module 2503, configured to establish a control session between the first network device and the second network device based on the third YANG module.

In an example embodiment, the switching module 2502 is configured to unload a currently loaded YANG module and load the third YANG module based on the first RPC request message.

In an example embodiment, the switching module 2502 is further configured to terminate an original service component, and run a new service component corresponding to the third YANG module.

In an example embodiment, the switching module 2502 is configured to: generate first difference information based on data of the unloaded YANG module, and generate second difference information based on data of the third YANG module; and control, based on the first difference information, the original service component to clear and release a resource, and run, based on the second difference information, the new service component corresponding to the third YANG module to execute a service.

In an example embodiment, the switching module 2502 is further configured to: when the first RPC request message further includes first indication information, switch a fourth YANG module on which the third YANG module depends, where the first indication information is used to indicate that the fourth YANG module on which the third YANG module depends is to be switched.

In an example embodiment, the switching module 2502 is further configured to: when the first RPC request message further includes first option information, switch a non-target YANG module in the fourth YANG module on which the third YANG module depends, where the first option information is used to indicate that a target YANG module in the fourth YANG module on which the third YANG module depends remains unchanged.

In an example embodiment, the switching module 2502 is further configured to switch a target set when the first RPC request message further includes second option information, where the second option information is used to indicate that the target set is to be switched, and the target set is a set other than a set to which the third YANG module belongs.

In an example embodiment, the apparatus further includes:
an obtaining module, configured to obtain a YANG module list based on the currently loaded YANG module and the third YANG module, where the YANG module list does not include a YANG module that conflicts with the third YANG module; and
a detection module, configured to detect whether a dependency chain for the YANG module list is complete.

The switching module is configured to: when the dependency chain for the YANG module list is complete, perform the step of unloading a currently loaded YANG module and loading the third YANG module based on the first RPC request message.

It should be understood that, when the apparatus provided in FIG. 24 or FIG. 25 implement functions of the apparatus, division into the functional modules is merely used as an example for description. During actual application, the functions may be allocated to different functional modules for implementation based on a requirement. In other words, an inner structure of a device is divided into different functional modules, to implement all or some of the functions described above. In addition, the apparatuses provided in the foregoing embodiments and the method embodiments are based on a same concept. For a specific implementation process, refer to the method embodiments, and details are not described herein again.

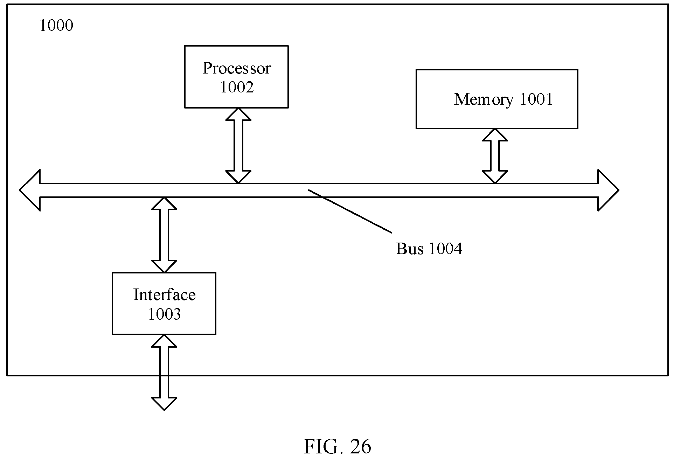

Refer to FIG. 26. An embodiment of this application further provides a network device 1000. The network device 1000 shown in FIG. 26 is configured to perform operations related to the foregoing network device management method. The network device 1000 includes a memory 1001, a processor 1002, and an interface 1003. The memory 1001, the processor 1002, and the interface 1003 are connected to each other by using a bus 1004.

The memory 1001 stores at least one instruction. The at least one instruction is loaded and executed by the processor 1002, to implement any one of the foregoing network device management methods.

The interface 1003 is used for communication with another device in a network. The interface 1003 may implement communication in a wireless or wired manner. For example, the interface 1003 may be a network adapter. For example, the network device 1000 may communicate with a server through the interface 1003.

It should be understood that FIG. 26 shows only a simplified design of the network device 1000. During actual application, the network device may include any quantity of interfaces, processors, or memories. In addition, the processor may be a central processing unit (Central Processing Unit, CPU), or may be another general-purpose processor, a digital signal processor (digital signal processor, DSP), an application-specific integrated circuit (ASIC), a field-programmable gate array (FPGA) or another programmable logic device, a discrete gate or transistor logic device, a discrete hardware component, or the like. The general-purpose processor may be a microprocessor, any conventional processor, or the like. It should be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a nonvolatile random access memory. For example, the memory may further store information about a device type.

The memory may be a volatile memory or a nonvolatile memory, or may include both a volatile memory and a nonvolatile memory. The nonvolatile memory may be a read-only memory (ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (RAM), used as an external cache. By way of example but not limitation, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A network management system is further provided. The system includes a first network device and a second network device. The first network device is configured to perform the functions performed by the first network device in the foregoing network management method, and the second network device is configured to perform the functions performed by the second network device in the foregoing network management method.

A computer-readable storage medium is further provided. The storage medium stores at least one instruction. A processor loads and executes the instruction, to implement any one of the foregoing network management methods.

This application provides a computer program. When the computer program is executed by a computer, a processor or the computer may be enabled to perform corresponding operations and/or procedures in the foregoing method embodiments.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid-State Disk)), or the like.

## Claims

1. A device management method, wherein the method comprises:
obtaining (701), by a first network device, information about a second yet another next generation, YANG, module in a second network device, wherein the first network device is a network management device and wherein the information about the second YANG module comprises a version information;
determining (701), by the first network device based on the information about the second YANG module, a first YANG module that is in the first network device and that is associated with the second YANG module;
determining (702), by the first network device, that the second YANG module is incompatible with the first YANG module by comparing the version information of the second YANG module with version information of the fist YANG module, and sending, by the first network device, a first remote procedure call, RPC, request message to the second network device, wherein the first RPC request message comprises information about a third YANG module that is identifiable by the first network device, wherein the information about the third YANG module that is identifiable to the first network device comprises version information of a set to which the third YANG module belongs, wherein the first YANG module comprises the third YANG module, and the first RPC request message is used to trigger the second network device to switch a YANG module that is running to the third YANG module; and
establishing (705), by the first network device, a control session between the first network device and the second network device based on the third YANG module.

2. The method according to claim 1, wherein the first RPC request message further comprises first indication information, and the first indication information is used to indicate that a fourth YANG module on which the third YANG module depends is to be switched.

3. The method according to any one of claims 1 or 2, wherein the first RPC request message further comprises first option information, and the first option information is used to indicate that a target YANG module in the fourth YANG module on which the third YANG module depends remains unchanged.

4. The method according to any one of claims 1 to 3, wherein the first RPC request message further comprises second option information, the second option information is used to indicate that a target set is to be switched, and the target set is a set other than the set to which the third YANG module belongs.

5. The method according to any one of claims 1 to 4, wherein the second YANG module in the second network device is a YANG module that is currently running in the second network device.

6. The method according to any one of claims 1 to 5, wherein before the first network device establishes (705) the control session between the first network device and the second network device based on the third YANG module, the first network device receives an RPC reply message, wherein the reply message indicates that switching has been performed.

7. A device management method, wherein the method comprises:
receiving (703), by a second network device, a first remote procedure call, RPC, request message sent by a first network device, wherein the first RPC request message comprises information about a third yet another next generation, YANG, module that identifiable by the first network device, wherein the information about the third YANG module that is identifiable to the first network device comprises version information of a set to which the third YANG module belongs, wherein the third YANG module is included in a first YANG module, the first YANG module is determined by the first network device based on information about a second YANG module in the second network device, and the first RPC request message is used to trigger the second network device to switch a YANG module that is running to the third YANG module; and
switching (704) to the third YANG module based on the first RPC request message, and establishing a control session between the first network device and the second network device based on the third YANG module.

8. The method according to claim 7, wherein the switching (704) to the third YANG module based on the first RPC request message comprises:
unloading a currently loaded YANG module and loading the third YANG module based on the first RPC request message.

9. The method according to claim 7 or 8, wherein after the switching (704) to the third YANG module based on the first RPC request message, the method further comprises:
terminating an original service component, and running a new service component corresponding to the third YANG module.

10. The method according to claim 9, wherein the terminating an original service component, and running a new service component corresponding to the third YANG module comprises:
generating, by the second network device, first difference information based on data of the unloaded YANG module, and generating second difference information based on data of the third YANG module; and
controlling, based on the first difference information, the original service component to clear and release a resource, and running, based on the second difference information, the new service component corresponding to the third YANG module to execute a service.

11. The method according to any one of claims 7 to 10, wherein after the switching (704) to the third YANG module based on the first RPC request message, the method further comprises:
when the first RPC request message further comprises first indication information, switching a fourth YANG module on which the third YANG module depends, wherein the first indication information is used to indicate that the fourth YANG module on which the third YANG module depends is to be switched.

12. The method according to any one of claims 7 to 11, wherein after the switching (704) to the third YANG module based on the first RPC request message, the method further comprises:
when the first RPC request message further comprises first option information, switching a non-target YANG module in the fourth YANG module on which the third YANG module depends, wherein the first option information is used to indicate that a target YANG module in the fourth YANG module on which the third YANG module depends remains unchanged.

13. The method according to any one of claims 7 to 12, wherein after the switching (704) to the third YANG module based on the first RPC request message, the method further comprises:
switching a target set when the first RPC request message further comprises second option information,
wherein the second option information is used to indicate that the target set is to be switched, and the target set is a set other than a set to which the third YANG module belongs.

14. The method according to any one of claims 8 to 13, wherein before the unloading a currently loaded YANG module and loading the third YANG module based on the first RPC request message, the method further comprises:
obtaining a YANG module list based on the currently loaded YANG module and the third YANG module,
wherein the YANG module list does not comprise a YANG module that conflicts with the third YANG module;
detecting whether a dependency chain for the YANG module list is complete; and
when the dependency chain for the YANG module list is complete, performing the step of unloading a currently loaded YANG module and loading the third YANG module based on the first RPC request message.

15. A first network device, wherein the first network device comprises:
a memory and a processor, wherein the memory stores at least one instruction, and the processor loads and executes the at least one instruction, to implement the method according to any one of claims 1 to 6.

16. A second network device, wherein the second network device comprises:
a memory and a processor, wherein the memory stores at least one instruction, and the processor loads and executes the at least one instruction, to implement the method according to any one of claims 7 to 14.

17. A device management system, wherein the system comprises a first network device and a second network device,
the first network device performs the method according to any one of claims 1 to 6, and the second network device performs the method according to any one of claims 7 to 14.

18. A computer-readable storage medium, wherein the storage medium stores at least one instruction, and a processor loads and executes the instruction, to implement the method according to any one of claims 1 to 14.

## Patentansprüche

1. Vorrichtungsverwaltungsverfahren, wobei das Verfahren umfasst:
Erhalten (701), durch eine erste Netzwerkvorrichtung, von Informationen über ein zweites Yet-Another-Next-Generation(YANG)-Modul in einer zweiten Netzwerkvorrichtung, wobei die erste Netzwerkvorrichtung eine Netzwerkverwaltungsvorrichtung ist und wobei die Informationen über das zweite YANG-Modul Versionsinformationen umfassen;
Bestimmen (701), durch die erste Netzwerkvorrichtung basierend auf den Informationen über das zweite YANG-Modul, eines ersten YANG-Moduls, das sich in der ersten Netzwerkvorrichtung befindet und das dem zweiten YANG-Modul zugeordnet ist;
Bestimmen (702), durch die erste Netzwerkvorrichtung, dass das zweite YANG-Modul mit dem ersten YANG-Modul inkompatibel ist, durch Vergleichen der Versionsinformationen des zweiten YANG-Moduls mit Versionsinformationen des ersten YANG-Moduls, und Senden, durch die erste Netzwerkvorrichtung, einer ersten Remote-Procedure-Call(RPC)-Anforderungsnachricht an die zweite Netzwerkvorrichtung, wobei die erste RPC-Anforderungsnachricht Informationen über ein drittes YANG-Modul, das durch die erste Netzwerkvorrichtung identifizierbar ist, umfasst, wobei die Informationen über das dritte YANG-Modul, das für die erste Netzwerkvorrichtung identifizierbar ist, Versionsinformationen eines Satzes, zu dem das dritte YANG-Modul gehört, umfassen, wobei das erste YANG-Modul das dritte YANG-Modul umfasst und die erste RPC-Anforderungsnachricht verwendet wird, um die zweite Netzwerkvorrichtung auszulösen, ein YANG-Modul, das läuft, auf das dritte YANG-Modul umzuschalten; und
Aufbauen (705), durch die erste Netzwerkvorrichtung, einer Steuersitzung zwischen der ersten Netzwerkvorrichtung und der zweiten Netzwerkvorrichtung basierend auf dem dritten YANG-Modul.

2. Verfahren nach Anspruch 1, wobei die erste RPC-Anforderungsnachricht ferner erste Angabeinformationen umfasst und die ersten Angabeinformationen verwendet werden, um anzugeben, dass ein viertes YANG-Modul, von dem das dritte YANG-Modul abhängt, umgeschaltet werden soll.

3. Verfahren nach einem der Ansprüche 1 oder 2, wobei die erste RPC-Anforderungsnachricht ferner erste Optionsinformationen umfasst und die ersten Optionsinformationen verwendet werden, um anzugeben, dass ein Ziel-YANG-Modul in dem vierten YANG-Modul, von dem das dritte YANG-Modul abhängt, unverändert bleibt.

4. Verfahren nach einem der Ansprüche 1 bis 3, wobei die erste RPC-Anforderungsnachricht ferner zweite Optionsinformationen umfasst, die zweiten Optionsinformationen verwendet werden, um anzugeben, dass ein Zielsatz umgeschaltet werden soll, und der Zielsatz ein anderer Satz als der Satz, zu dem das dritte YANG-Modul gehört, ist.

5. Verfahren nach einem der Ansprüche 1 bis 4, wobei das zweite YANG-Modul in der zweiten Netzwerkvorrichtung ein YANG-Modul, das in der zweiten Netzwerkvorrichtung aktuell läuft, ist.

6. Verfahren nach einem der Ansprüche 1 bis 5, wobei, bevor die erste Netzwerkvorrichtung die Steuersitzung zwischen der ersten Netzwerkvorrichtung und der zweiten Netzwerkvorrichtung basierend auf dem dritten YANG-Modul aufbaut (705), die erste Netzwerkvorrichtung eine RPC-Antwortnachricht empfängt, wobei die Antwortnachricht angibt, dass ein Umschalten durchgeführt wurde.

7. Vorrichtungsverwaltungsverfahren, wobei das Verfahren umfasst:
Empfangen (703), durch eine zweite Netzwerkvorrichtung, einer ersten Remote-Procedure-Call(RPC)-Anforderungsnachricht, die durch eine erste Netzwerkvorrichtung gesendet wird, wobei die erste RPC-Anforderungsnachricht Informationen über ein drittes Yet-Another-Next-Generation(YANG)-Modul, das durch die erste Netzwerkvorrichtung identifizierbar ist, umfasst, wobei die Informationen über das dritte YANG-Modul, das für die erste Netzwerkvorrichtung identifizierbar ist, Versionsinformationen eines Satzes, zu dem das dritte YANG-Modul gehört, umfassen, wobei das dritte YANG-Modul in einem ersten YANG-Modul eingeschlossen ist, das erste YANG-Modul durch die erste Netzwerkvorrichtung basierend auf Informationen über ein zweites YANG-Modul in der zweiten Netzwerkvorrichtung bestimmt wird und die erste RPC-Anforderungsnachricht verwendet wird, um die zweite Netzwerkvorrichtung auszulösen, ein YANG-Modul, das läuft, auf das dritte YANG-Modul umzuschalten; und
Umschalten (704) auf das dritte YANG-Modul basierend auf der ersten RPC-Anforderungsnachricht und Aufbauen einer Steuersitzung zwischen der ersten Netzwerkvorrichtung und der zweiten Netzwerkvorrichtung basierend auf dem dritten YANG-Modul.

8. Verfahren nach Anspruch 7, wobei das Umschalten (704) auf das dritte YANG-Modul basierend auf der ersten RPC-Anforderungsnachricht umfasst:
Entladen eines aktuell geladenen YANG-Moduls und Laden des dritten YANG-Moduls basierend auf der ersten RPC-Anforderungsnachricht.

9. Verfahren nach Anspruch 7 oder 8, wobei, nach dem Umschalten (704) auf das dritte YANG-Modul basierend auf der ersten RPC-Anforderungsnachricht, das Verfahren ferner umfasst:
Beenden einer ursprünglichen Dienstkomponente und Laufenlassen einer neuen Dienstkomponente, die dem dritten YANG-Modul entspricht.

10. Verfahren nach Anspruch 9, wobei das Beenden einer ursprünglichen Dienstkomponente und das Laufenlassen einer neuen Dienstkomponente, die dem dritten YANG-Modul entspricht, umfasst:
Erzeugen, durch die zweite Netzwerkvorrichtung, von ersten Differenzinformationen basierend auf Daten des entladenen YANG-Moduls und Erzeugen von zweiten Differenzinformationen basierend auf Daten des dritten YANG-Moduls; und
Steuern, basierend auf den ersten Differenzinformationen, der ursprünglichen Dienstkomponente, um eine Ressource zu löschen und freizugeben, und Laufenlassen, basierend auf den zweiten Differenzinformationen, der neuen Dienstkomponente, die dem dritten YANG-Modul entspricht, um einen Dienst auszuführen.

11. Verfahren nach einem der Ansprüche 7 bis 10, wobei, nach dem Umschalten (704) auf das dritte YANG-Modul basierend auf der ersten RPC-Anforderungsnachricht, das Verfahren ferner umfasst:
wenn die erste RPC-Anforderungsnachricht ferner erste Angabeinformationen umfasst, Umschalten eines vierten YANG-Moduls, von dem das dritte YANG-Modul abhängt, wobei die ersten Angabeinformationen verwendet werden, um anzugeben, dass das vierte YANG-Modul, von dem das dritte YANG-Modul abhängt, umgeschaltet werden soll.

12. Verfahren nach einem der Ansprüche 7 bis 11, wobei, nach dem Umschalten (704) auf das dritte YANG-Modul basierend auf der ersten RPC-Anforderungsnachricht, das Verfahren ferner umfasst:
wenn die erste RPC-Anforderungsnachricht ferner erste Optionsinformationen umfasst, Umschalten eines Nichtziel-YANG-Moduls in dem vierten YANG-Modul, von dem das dritte YANG-Modul abhängt, wobei die ersten Optionsinformationen verwendet werden, um anzugeben, dass ein Ziel-YANG-Modul in dem vierten YANG-Modul, von dem das dritte YANG-Modul abhängt, unverändert bleibt.

13. Verfahren nach einem der Ansprüche 7 bis 12, wobei, nach dem Umschalten (704) auf das dritte YANG-Modul basierend auf der ersten RPC-Anforderungsnachricht, das Verfahren ferner umfasst:
Umschalten eines Zielsatzes, wenn die erste RPC-Anforderungsnachricht ferner zweite Optionsinformationen umfasst, wobei die zweiten Optionsinformationen verwendet werden, um anzugeben, dass der Zielsatz umgeschaltet werden soll, und der Zielsatz ein anderer Satz als der Satz, zu dem das dritte YANG-Modul gehört, ist.

14. Verfahren nach einem der Ansprüche 8 bis 13, wobei, vor dem Entladen eines aktuell geladenen YANG-Moduls und dem Laden des dritten YANG-Moduls basierend auf der ersten RPC-Anforderungsnachricht, das Verfahren ferner umfasst:
Erhalten einer YANG-Modulliste basierend auf dem aktuell geladenen YANG-Modul und dem dritten YANG-Modul, wobei die YANG-Modulliste kein YANG-Modul, das mit dem dritten YANG-Modul in Konflikt steht, umfasst;
Feststellen, ob eine Abhängigkeitskette für die YANG-Modulliste vollständig ist; und
wenn die Abhängigkeitskette für die YANG-Modulliste vollständig ist, Durchführen des Schritts des Entladens eines aktuell geladenen YANG-Moduls und des Ladens des dritten YANG-Moduls basierend auf der ersten RPC-Anforderungsnachricht.

15. Erste Netzwerkvorrichtung, wobei die erste Netzwerkvorrichtung umfasst:
einen Speicher und einen Prozessor, wobei der Speicher mindestens eine Anweisung speichert und der Prozessor die mindestens eine Anweisung lädt und ausführt, um das Verfahren nach einem der Ansprüche 1 bis 6 zu implementieren.

16. Zweite Netzwerkvorrichtung, wobei die zweite Netzwerkvorrichtung umfasst:
einen Speicher und einen Prozessor, wobei der Speicher mindestens eine Anweisung speichert und der Prozessor die mindestens eine Anweisung lädt und ausführt, um das Verfahren nach einem der Ansprüche 7 bis 14 zu implementieren.

17. Vorrichtungsverwaltungssystem, wobei das System eine erste Netzwerkvorrichtung und eine zweite Netzwerkvorrichtung umfasst,
wobei die erste Netzwerkvorrichtung das Verfahren nach einem der Ansprüche 1 bis 6 durchführt und die zweite Netzwerkvorrichtung das Verfahren nach einem der Ansprüche 7 bis 14 durchführt.

18. Computerlesbares Speicherungsmedium, wobei das Speicherungsmedium mindestens eine Anweisung speichert und ein Prozessor die Anweisung lädt und ausführt, um das Verfahren nach einem der Ansprüche 1 bis 14 zu implementieren.

## Revendications

1. Procédé de gestion de dispositif, dans lequel le procédé comprend :
l'obtention (701), par un premier dispositif de réseau, d'informations concernant un deuxième module d'encore une nouvelle génération, YANG, dans un second dispositif de réseau, dans lequel le premier dispositif de réseau est un dispositif de gestion de réseau et dans lequel les informations concernant le deuxième module YANG comprennent des informations de version ;
la détermination (701), par le premier dispositif de réseau sur la base des informations concernant le deuxième module YANG, d'un premier module YANG qui se trouve dans le premier dispositif de réseau et qui est associé au deuxième module YANG ;
le fait de déterminer (702), par le premier dispositif de réseau, que le deuxième module YANG est incompatible avec le premier module YANG en comparant les informations de version du deuxième module YANG avec des informations de version du premier module YANG, et l'envoi, par le premier dispositif de réseau, d'un premier message de demande d'appel de procédure à distance, RPC, au second dispositif de réseau, dans lequel le premier message de demande RPC comprend des informations concernant un troisième module YANG qui est identifiable par le premier dispositif de réseau, dans lequel les informations concernant le troisième module YANG qui est identifiable par le premier dispositif de réseau comprennent des informations de version d'un ensemble auquel appartient le troisième module YANG, dans lequel le premier module YANG comprend le troisième module YANG, et le premier message de demande RPC est utilisé pour déclencher le second dispositif de réseau afin de commuter un module YANG qui est en cours d'exécution vers le troisième module YANG ; et
l'établissement (705), par le premier dispositif de réseau, d'une session de commande entre le premier dispositif de réseau et le second dispositif de réseau sur la base du troisième module YANG.

2. Procédé selon la revendication 1, dans lequel le premier message de demande RPC comprend en outre de premières informations d'indication, et les premières informations d'indication sont utilisées pour indiquer qu'un quatrième module YANG dont dépend le troisième module YANG doit être commuté.

3. Procédé selon l'une quelconque des revendications 1 ou 2, dans lequel le premier message de demande RPC comprend en outre de premières informations d'option, et les premières informations d'option sont utilisées pour indiquer qu'un module YANG cible dans le quatrième module YANG dont dépend le troisième module YANG reste inchangé.

4. Procédé selon l'une quelconque des revendications 1 à 3, dans lequel le premier message de demande RPC comprend en outre de secondes informations d'option, les secondes informations d'option sont utilisées pour indiquer qu'un ensemble cible doit être commuté, et l'ensemble cible est un ensemble autre que l'ensemble auquel appartient le troisième module YANG.

5. Procédé selon l'une quelconque des revendications 1 à 4, dans lequel le deuxième module YANG dans le second dispositif de réseau est un module YANG qui est actuellement en cours d'exécution dans le second dispositif de réseau.

6. Procédé selon l'une quelconque des revendications 1 à 5, dans lequel, avant l'établissement (705), par le premier dispositif de réseau, de la session de commande entre le premier dispositif de réseau et le second dispositif de réseau sur la base du troisième module YANG, le premier dispositif de réseau reçoit un message de réponse RPC, dans lequel le message de réponse indique qu'une commutation a été réalisée.

7. Procédé de gestion de dispositif, dans lequel le procédé comprend :
la réception (703), par un second dispositif de réseau, d'un premier message de demande d'appel de procédure à distance, RPC, envoyé par un premier dispositif de réseau, dans lequel le premier message de demande RPC comprend des informations concernant un troisième module d'encore une nouvelle génération, YANG, qui est identifiable par le premier dispositif de réseau, dans lequel les informations concernant le troisième module YANG qui est identifiable par le premier dispositif de réseau comprennent des informations de version d'un ensemble auquel appartient le troisième module YANG, dans lequel le troisième module YANG est inclus dans un premier module YANG, le premier module YANG est déterminé par le premier dispositif de réseau sur la base d'informations concernant un deuxième module YANG dans le second dispositif de réseau, et le premier message de demande RPC est utilisé pour déclencher le second dispositif de réseau pour commuter un module YANG qui est en cours d'exécution vers le troisième module YANG ; et
la commutation (704) vers le troisième module YANG sur la base du premier message de demande RPC, et l'établissement d'une session de commande entre le premier dispositif de réseau et le second dispositif de réseau sur la base du troisième module YANG.

8. Procédé selon la revendication 7, dans lequel la commutation (704) vers le troisième module YANG sur la base du premier message de demande RPC comprend :
le déchargement d'un module YANG actuellement chargé et le chargement du troisième module YANG sur la base du premier message de demande RPC.

9. Procédé selon la revendication 7 ou 8, dans lequel, après la commutation (704) vers le troisième module YANG sur la base du premier message de demande RPC, le procédé comprend en outre :
le fait de mettre fin à un composant de service d'origine, et l'exécution d'un nouveau composant de service correspondant au troisième module YANG.

10. Procédé selon la revendication 9, dans lequel le fait de mettre fin à un composant de service d'origine, et l'exécution d'un nouveau composant de service correspondant au troisième module YANG comprennent :
la génération, par le second dispositif de réseau, de premières informations de différence sur la base de données du module YANG déchargé, et la génération de secondes informations de différence sur la base de données du troisième module YANG ; et
la commande, sur la base des premières informations de différence, du composant de service d'origine pour effacer et libérer une ressource, et l'exécution, sur la base des secondes informations de différence, du nouveau composant de service correspondant au troisième module YANG pour exécuter un service.

11. Procédé selon l'une quelconque des revendications 7 à 10, dans lequel, après la commutation (704) vers le troisième module YANG sur la base du premier message de demande RPC, le procédé comprend en outre :
lorsque le premier message de demande RPC comprend en outre de premières informations d'indication, la commutation d'un quatrième module YANG dont dépend le troisième module YANG, dans lequel les premières informations d'indication sont utilisées pour indiquer que le quatrième module YANG dont dépend le troisième module YANG doit être commuté.

12. Procédé selon l'une quelconque des revendications 7 à 11, dans lequel, après la commutation (704) vers le troisième module YANG sur la base du premier message de demande RPC, le procédé comprend en outre :
lorsque le premier message de demande RPC comprend en outre de premières informations d'option, la commutation d'un module YANG non cible dans le quatrième module YANG dont dépend le troisième module YANG, dans lequel les premières informations d'option sont utilisées pour indiquer qu'un module YANG cible dans le quatrième module YANG dont dépend le troisième module YANG reste inchangé.

13. Procédé selon l'une quelconque des revendications 7 à 12, dans lequel, après la commutation (704) vers le troisième module YANG sur la base du premier message de demande RPC, le procédé comprend en outre :
la commutation d'un ensemble cible lorsque le premier message de demande RPC comprend en outre de secondes informations d'option, dans lequel les secondes informations d'option sont utilisées pour indiquer que l'ensemble cible doit être commuté, et l'ensemble cible est un ensemble autre qu'un ensemble auquel appartient le troisième module YANG.

14. Procédé selon l'une quelconque des revendications 8 à 13, dans lequel, avant le déchargement d'un module YANG actuellement chargé et le chargement du troisième module YANG sur la base du premier message de demande RPC, le procédé comprend en outre :
l'obtention d'une liste de modules YANG sur la base du module YANG actuellement chargé et du troisième module YANG, dans lequel la liste de modules YANG ne comprend pas de module YANG en conflit avec le troisième module YANG ;
le fait de détecter si une chaîne de dépendances pour la liste de modules YANG est complète ; et
lorsque la chaîne de dépendances pour la liste de modules YANG est complète, la réalisation de l'étape consistant à décharger un module YANG actuellement chargé et à charger le troisième module YANG sur la base du premier message de demande RPC.

15. Premier dispositif de réseau, dans lequel le premier dispositif de réseau comprend :
une mémoire et un processeur, dans lequel la mémoire stocke au moins une instruction, et le processeur charge et exécute l'au moins une instruction, pour mettre en œuvre le procédé selon l'une quelconque des revendications 1 à 6.

16. Second dispositif de réseau, dans lequel le second dispositif de réseau comprend :
une mémoire et un processeur, dans lequel la mémoire stocke au moins une instruction, et le processeur charge et exécute l'au moins une instruction, pour mettre en œuvre le procédé selon l'une quelconque des revendications 7 à 14.

17. Système de gestion de dispositif, dans lequel le système comprend un premier dispositif de réseau et un second dispositif de réseau,
le premier dispositif de réseau réalise le procédé selon l'une quelconque des revendications 1 à 6, et le second dispositif de réseau réalise le procédé selon l'une quelconque des revendications 7 à 14.

18. Support de stockage lisible par ordinateur, dans lequel le support de stockage stocke au moins une instruction, et un processeur charge et exécute l'instruction, pour mettre en œuvre le procédé selon l'une quelconque des revendications 1 à 14.
